# EUROPÄISCHE PATENTANMELDUNG

(11) **EP 3 447 611 A1**
(43) Veröffentlichungstag der Anmeldung: **27.02.2019**
(21) Anmeldenummer: 18182513.4
(22) Anmeldetag: 09.07.2018
(51) Int. Cl.: G06F 3/01, G06F 3/0346

(54) **VERFAHREN ZUM ÜBERTRAGEN DIGITALER INFORMATIONEN ZWISCHEN WENIGSTENS ZWEI ELEKTRONISCHEN GERÄTEN**

(30) Priorität: 25.08.2017 DE 102017119548
(71) Anmelder: Bundesdruckerei GmbH, 10969 Berlin (DE)
(72) Erfinder: Beuthel, Marie, 12043 Berlin (DE); Wohlauf, Anne, 13359 Berlin (DE); Raab, Lorenz, 10435 Berlin (DE)
(74) Vertreter: Mammel und Maser

(57) **Zusammenfassung**

Die Erfindung betrifft ein Verfahren zum Übertragen digitaler Informationen zwischen wenigstens zwei elektronischen Geräten, bei welchem jeder von zumindest zwei Benutzern jeweils eines der wenigstens zwei elektronischen Geräte mitführt und zum Austausch der digitalen Informationen eine Kommunikationsverbindung zwischen den wenigstens zwei elektronischen Geräten aufgebaut wird, wobei eine physische Interaktion zwischen den zumindest zwei Benutzern von zumindest einem der wenigstens zwei elektronischen Geräte erfasst wird, durch das Erfassen der physischen Interaktion von dem zumindest einem der wenigstens zwei elektronischen Geräte, der Aufbau der Kommunikationsverbindung zwischen den wenigstens zwei elektronischen Geräten angesteuert wird und die digitalen Informationen zwischen den wenigstens zwei elektronischen Geräten ausgetauscht werden. (Hierzu Figur 1)

## Beschreibung

Die Erfindung betrifft ein Verfahren zum Übertragen digitaler Informationen zwischen wenigstens zwei elektronischen Geräten.

Es sind Verfahren zum Übertragen digitaler Informationen bekannt, bei welchen zwischen wenigstens zwei elektronischen Geräten eine Kommunikationsverbindung zum Austausch digitaler Informationen aufgebaut wird. Solche Kommunikationsverbindungen können sowohl auf kabelgebundenen als auch auf drahtlosen Übertragungsverfahren basieren. Hierbei werden die digitalen Informationen zumeist aufgrund eines manuellen Steuerbefehls durch den Benutzer oder durch ein vollständig automatisiertes Übertragungsprotokoll ausgetauscht. Darüber hinaus sind Verfahren zum Übertragen digitaler Informationen bekannt, bei denen sich elektronische Geräte bei einer Annäherung zueinander gegenseitig erkennen und eine drahtlose Kommunikationsverbindung aufbauen, um digitale Informationen auszutauschen. Hierbei ist zum Aufbau der drahtlosen Kommunikationsverbindung zwischen den elektronischen Geräten eine Autorisierung, beispielsweise durch eine PIN- oder Kennwort- Eingabe, also ebenfalls das Ausführen eines manuellen Steuerbefehls durch die Benutzer, erforderlich.

Aufgabe der Erfindung ist es ein Verfahren zum Übertragen digitaler Informationen zwischen wenigstens zwei elektronischen Geräten vorzuschlagen, durch welches ein hoher Benutzerkomfort zum Übertragen der digitalen Informationen erreicht wird. Des Weiteren ist es Aufgabe der Erfindung ein elektronisches Gerät sowie ein System von elektronischen Geräten vorzuschlagen, durch welche eine Übertragung der digitalen Informationen ermöglicht ist. Zudem ist es Aufgabe der Erfindung ein Computerprogramm vorzuschlagen, welches diesen Austausch der digitalen Informationen ermöglicht.

Diese Aufgabe wird durch ein Verfahren zum Übertragen digitaler Informationen zwischen wenigstens zwei elektronischen Geräten, bei welchem jeder von zumindest zwei Benutzern jeweils eines der wenigstens zwei elektronischen Geräte mitführt und zum Austausch der digitalen Informationen eine Kommunikationsverbindung zwischen den wenigstens zwei elektronischen Geräten aufgebaut wird, gelöst, bei dem die zumindest zwei Benutzer in eine physische Interaktion miteinander treten, die physische Interaktion von zumindest einem der wenigstens zwei elektronischen Geräte erfasst wird, durch das Erfassen der physischen Interaktion von dem zumindest einem der wenigstens zwei elektronischen Geräte der Aufbau der Kommunikationsverbindung zwischen den wenigstens zwei elektronischen Geräten angesteuert wird und die digitalen Informationen zwischen den wenigstens zwei elektronischen Geräten ausgetauscht werden. Durch dieses Verfahren ist ein komfortabler und automatisierter Austausch digitaler Informationen zwischen zwei oder mehr elektronischen Geräten ermöglicht. Dies wird dadurch erreicht, dass eine Ansteuerung zum Aufbau der Kommunikationsverbindung zwischen den elektronischen Geräten mit dem Ausführen der physischen Interaktion zwischen den Benutzern verknüpft ist. Hierzu wird von den Benutzern jeweils ein elektronisches Gerät mitgeführt, wobei wenigstens eines der elektronischen Geräte die physische Interaktion zwischen den Benutzern registrieren und erfassen kann. Dadurch können die Benutzer den Aufbau der Kommunikationsverbindung zwischen den elektronischen Geräten mit dem Ausführen der physischen Interaktion ansteuern, sodass beispielsweise aufgrund eines natürlichen Interaktionsvorgangs zwischen den Benutzern gezielt digitale Informationen zwischen den elektronischen Geräten ausgetauscht werden können. Dies ermöglicht neben dem Komfortgewinn für den Benutzer eine erhebliche Zeitersparnis, da durch die Verknüpfung der physischen Interaktion zwischen den Benutzern und dem Steuerbefehl zum Aufbau der Kommunikationsverbindung zwischen den elektronischen Geräten ein unmittelbarer Austausch relevanter digitaler Informationen erfolgen kann.

Eine bevorzugte Ausgestaltung des Verfahrens sieht vor, dass die physische Interaktion durch eine Geste von wenigstens einem der zumindest zwei Benutzer ausgeführt wird. Dadurch kann der Aufbau der Kommunikationsverbindung zwischen den elektronischen Geräten mit dem Ausführen eines natürlichen Interaktionsvorgangs in Form einer Geste zwischen zwei oder mehr Benutzern verknüpft werden. Ein solcher Interaktionsvorgang kann beispielsweise eine Körperbewegung, insbesondere einen Handschlag, eine Berührung, eine Zeigebewegung oder eine Wurfbewegung darstellen. Beispielsweise wird bei einer Zeigebewegung, bei welcher nur ein Benutzer mit seinem Finger auf einen weiteren Benutzer zeigt, die Zeigebewegung durch das von dem Benutzer mitgeführte elektronische Gerät erfasst, sodass durch die erfasste Zeigebewegung ein gezielter Aufbau der Kommunikationsverbindung zwischen dem elektronischen Gerät des zeigenden Benutzers und dem elektronischen Gerät des weiteren Benutzers aufgebaut werden kann. Ebenso kann die physische Interaktion in Form eines Händeschüttelns zwischen zwei Benutzern ausgeführt werden. Dabei kann zudem der Bedeutungsgehalt der ausgeführten nonverbalen Geste (Handschlag, Fingerzeig oder ähnliches) zwischen den Benutzern genutzt werden, beispielsweise ein unterschiedlich starkes Händeschütteln oder eine bestimmte Bewegungsart beim Händeschütteln, um zusätzlich eine oder mehrere bestimmte digitale Informationen zu übertragen. Das heißt, dass beispielsweise das Bestätigen eines Ereignisses per Handschlag, durch einen Fingerzeig oder durch eine vergleichbare Geste, gleichzeitig als Bestätigung zum Aufbau der Kommunikationsverbindung bzw. zum Übertragen der digitalen Informationen genutzt werden kann.

Eine vorteilhafte Weiterbildung des Verfahrens sieht vor, dass die von zumindest einem der wenigstens zwei elektronischen Geräte erfasste physische Interaktion mit einem Interaktionsmusters verglichen und verifiziert wird und bei einer erfolgreichen Verifizierung der erfassten physischen Interaktion, die digitalen Informationen zwischen den wenigstens zwei elektronischen Geräten ausgetauscht werden. Dadurch kann bei dem Übertragungsverfahren eine erhöhte Sicherheit erreicht werden, da die digitalen Informationen nur übertragen werden, wenn die erfasste physische Interaktion mit dem hinterlegten Interaktionsmuster in dem elektrischen Gerät des jeweiligen anderen Benutzers übereinstimmt.

Bevorzugt kann vorgesehen sein, dass mehrere sich unterscheidende Interaktionsmuster in dem elektronischen Gerät hinterlegt sind, wobei jedem Interaktionsmuster unterschiedliche digitale Informationen zugeordnet sind. Dadurch kann vorgesehen werden, dass verschiedenen physischen Interaktionen die Übertragung unterschiedlicher digitaler Informationen zugeordnet sind. Somit können die Benutzer durch das Ausführen unterschiedlicher Gesten gezielt die mit dem entsprechenden Interaktionsmuster verknüpften digitalen Informationen übermitteln. Dadurch kann ein Komfort- und eine Zeitersparnis zum Übertragen der entsprechenden digitalen Information erreicht werden.

Eine weitere vorteilhafte Ausgestaltung des Verfahrens sieht vor, dass die physische Interaktion durch eine in den wenigstens zwei elektronischen Geräten vorgesehene inertiale Messeinheit (IMU), insbesondere durch einen Beschleunigungssensor und/oder Drehratensensor, erfasst wird. Durch eine solche inertiale Messeinheit können Bewegungen einer physischen Interaktion zwischen den Benutzern mit hoher Genauigkeit erfasst werden. Dabei weisen die Beschleunigungssensoren und/oder Drehratensensoren eine Messgenauigkeit auf, bei der auch geringfügige Unterschiede von Bewegungsabläufen der Geste registriert werden können. Dadurch kann eine hohe Sicherheit erreicht werden, da nur die der physischen Interaktion zugeordneten entsprechenden digitalen Informationen übermittelt werden. Aufgrund der hohen Messgenauigkeit dieser Messeinheiten sind auch geringe Unterschiede zwischen zwei Bewegungen registrierbar, sodass zudem ein Identifizieren eines autorisierten Benutzers ermöglicht sein kann. Hierfür wird die erfasste physische Interaktion eines Benutzers mit einem hinterlegten Interaktionsmusters eines autorisierten Benutzers verglichen, wobei nur dann die digitalen Informationen übermittelt werden, wenn die erfasste physische Interaktion exakt mit dem hinterlegten Interaktionsmuster übereinstimmt.

Eine bevorzugte Ausgestaltung des Verfahrens sieht vor, dass zum Authentifizieren des Benutzers von zumindest einem der wenigstens zwei elektronischen Geräte wenigstens ein biometrisches Merkmal des Benutzers erfasst wird. Dadurch kann eine hohe Sicherheit zur Überprüfung einer Berichtigung des Benutzers erzielt werden, indem der Aufbau der Kommunikationsverbindung bzw. die Übertragung der digitalen Informationen nur dann erfolgt, wenn das erfasste biometrische Merkmal mit einem hinterlegten biometrischen Merkmal eines autorisierten Benutzers übereinstimmt. Zudem kann durch das Erfassen eines biometrischen Merkmals ermöglicht sein, dass personengebundene Daten zusammen mit den digitalen Informationen übermittelt werden. Zusätzlich kann durch die Erfassung des biometrischen Merkmals ermöglicht werden, dass die digitalen Informationen zusammen mit einer personengebundenen Signatur übertragen werden.

Vorteilhafterweise kann vorgesehen sein, dass das biometrische Merkmal des Benutzers, vorzugsweise die Handgelenksvenenstruktur, die Handvenenstruktur, der Abdruck der Papillarleisten eines oder mehrerer Finger, ein Bewegungsablauf, Schrittmuster oder ein vergleichbares biometrisches Merkmal des Benutzers, über einen Sensor des elektronischen Gerätes erfasst wird. Durch das Vorsehen eines Sensors zum Erfassen eines biometrischen Merkmals des Benutzers kann eine Überprüfung einer Berechtigung eines Benutzers zum Übertragen der digitalen Informationen vorgesehen werden. Dadurch können nur solche Benutzer digitale Informationen zwischen den elektronischen Geräten austauschen, die zuvor anhand eines oder mehrerer biometrischen Merkmale autorisiert wurden.

Eine weitere vorteilhafte Ausgestaltung des Verfahrens sieht vor, dass das wenigstens eine erfasste biometrische Merkmal mit einem in dem zumindest einem der wenigstens zwei elektronischen Geräte hinterlegten biometrischen Merkmal verglichen wird und bei einer erfolgreichen Verifizierung des biometrischen Merkmals die Kommunikationsverbindung und/oder der Austausch der digitalen Informationen zwischen den wenigstens zwei elektronischen Geräten angesteuert wird. Dadurch kann eine besonders hohe Sicherheit einer Berechtigungsüberprüfung eines autorisierten Benutzers erreicht werden, da die Identifizierung des Benutzers anhand eines eindeutigen Vergleichs zwischen dem erfassten biometrischen Merkmal und dem in dem elektronischen Gerät hinterlegten biometrischen Merkmal durchgeführt wird.

Eine besonders bevorzugte Ausgestaltung des Verfahrens sieht vor, dass das elektronische Gerät an einem Arm, einer Hand, einem Handgelenk oder in der Kleidung des Benutzers vorgesehen wird, vorzugsweise als Armband, SmartWatch, Wearable Computer oder dergleichen, und vom Benutzer getragen wird. Durch eine solche mobile Ausgestaltung des elektronischen Gerätes kann dieses vom Benutzer mitgeführt bzw. getragen werden, ohne dass das elektronische Gerät bei einer Tätigkeit vom Benutzer als störend oder bewegungseinschränkend empfunden wird. Bei der Benutzung des elektronischen Gerätes unmittelbar am Handgelenk des Benutzers kann eine sehr genaue und fehlerfreie Erfassung einer Hand- oder Armbewegung beim Ausführen der physischen Interaktion ermöglicht sein. Ebenso kann das elektronische Gerät in der Kleidung des Benutzers integriert sein. Beispielsweise kann dieses in der Dienstkleidung eines Arbeiters vorgesehen werden, sodass dieser kein separates elektronisches Gerät mit sich führen muss. Ein solches in die Kleidung integriertes elektronisches Gerät kann weder vergessen noch verloren werden.

Zudem wird die Aufgabe der Erfindung durch ein elektronisches Gerät, welches eine Steuerung und eine Speichereinrichtung umfasst, sowie eine Sende- und Empfangseinrichtung zum Übertragen von in der Speichereinrichtung gespeicherten digitalen Informationen, gelöst, wobei das Übertragen der digitalen Informationen gemäß einer der zuvor beschriebenen Ausführungsformen des Verfahrens vorgesehen ist. Ein solches elektronisches Gerät kann als mobiles Gerät ausgebildet sein, sodass dieses von einem Benutzer mitgeführt werden kann. Beispielhaft kann das elektronische Gerät als Armband ausgestaltet sein und von dem Benutzer am Handgelenk getragen werden, welches als so genannter Wearable Computer bezeichnet wird. Das elektronische Gerät kann ebenso in einer Uhr oder einer Smartwatch integriert sein oder als eine solche ausgestaltet sein. Ebenso kann das elektronische Gerät als eine separate Einheit vorgesehen sein oder in einem anderen Gerät, beispielsweise einem Smartphone, integriert sein.

Die Aufgabe der Erfindung wird des Weiteren von einem System zum Übertragen digitaler Informationen zwischen wenigstens zwei elektronischen Geräten, wobei jedes der wenigstens zwei elektronischen Geräte von einem Benutzer mitführbar ist und zum Übertragen der digitalen Informationen eine Kommunikationsverbindung zwischen den wenigstens zwei elektronischen Geräten aufbaubar ist, gelöst, wobei das Übertragen der digitalen Informationen zwischen den wenigstens zwei elektronischen Geräten gemäß einem der zuvor beschriebenen Ausführungsformen des Verfahrens vorgesehen ist. Durch ein solches System von zwei oder mehr elektronischen Geräten kann ein komfortabler sowie automatisierter Austausch von digitalen Informationen ermöglicht sein. Hierzu führt jeder der wenigstens zwei Benutzer jeweils eines der wenigstens zwei elektronischen Gerät mit, sodass durch den Aufbau der Kommunikationsverbindung ein System von mehreren elektronischen Geräten bzw. ein zumindest temporäres Netzwerk zwischen den elektronischen Geräten gebildet ist. Dabei können die Benutzer den Aufbau der Kommunikationsverbindung zwischen den elektronischen Geräten mit dem Ausführen der physischen Interaktion ansteuern, wobei in Abhängigkeit von der Art der Ausgeführten physischen Interaktion zwischen den Benutzern gezielt digitale Informationen zwischen den elektronischen Geräten ausgetauscht werden können.

Die Aufgabe wird zudem durch ein Computerprogramm zum Übertragen digitaler Informationen zwischen wenigstens zwei elektronischen Geräten, welches auf den wenigstens zwei elektronischen Geräten ausführbar ist, wobei jeder von zumindest zwei Benutzern jeweils eines der wenigstens zwei elektronischen Geräte mitführt und zum Übertragen der digitalen Informationen eine Kommunikationsverbindung zwischen den wenigstens zwei elektronischen Geräten aufgebaut wird, gelöst, wobei eine physische Interaktion zwischen den zumindest zwei Benutzern von zumindest einem der wenigstens zwei elektronischen Geräte erfasst wird, durch das Erfassen der physischen Interaktion von dem zumindest einem der wenigstens zwei elektronischen Geräte der Aufbau der Kommunikationsverbindung zwischen den wenigstens zwei elektronischen Geräten angesteuert wird und die digitalen Informationen zwischen den wenigstens zwei elektronischen Geräten ausgetauscht werden. Ein solches Computerprogramm ermöglicht einen automatisierten und sicheren Austausch digitaler Informationen zwischen zwei oder mehr elektronischen Geräten, indem der Aufbau der Kommunikationsverbindung und Austausch von digitalen Informationen in Abhängigkeit von der Erfassten physischen Interaktion erfolgt. Um die Sicherheit bei der Übertragung der digitalen Informationen zu erhöhen, erfolgt die Übertragung nur, wenn die erfasste physische Interaktion mit dem hinterlegten Interaktionsmuster übereinstimmt. Zudem ist es durch das Computerprogramm ermöglicht, dass in Abhängigkeit von der Erfassten physischen Interaktion eine Unterscheidung zwischen mehreren Interaktionsmustern durchgeführt wird. Hierbei können verschiedenen Interaktionsmustern unterschiedliche digitale Informationen zugeordnet sein, sodass durch die ausgeführte physische Interaktion ein gezielter Informationsaustausch erfolgen kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Darstellung einer physischen Interaktion am Beispiel eines Handschlags zwischen zwei Benutzern,
Figur 2 eine weitere schematische Darstellung einer alternativen physischen Interaktion am Beispiel einer Zeigebewegung von einem Benutzer auf einen anderen Benutzer.

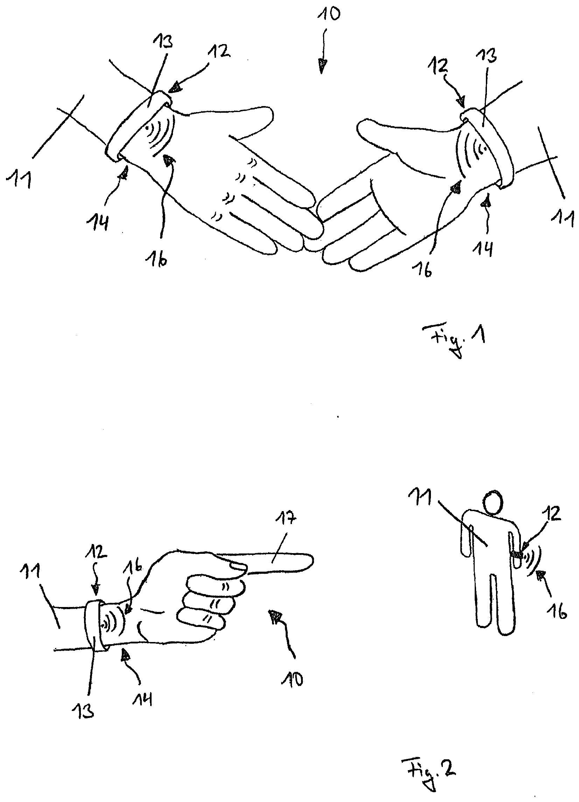

Figur 1 zeigt eine schematische Darstellung einer physischen Interaktion 10 zwischen zwei Benutzern 11 am Beispiel eines Handschlags. Dabei tragen beide Benutzer 11 jeweils ein elektronisches Gerät 12. Das elektronische Gerät 12 ist in Figur 1 beispielhaft als Armband 13 ausgestaltet und wird von den Benutzern 11 am Handgelenk 14 getragen. Ein solches als Armband 14 ausgestaltetes elektronisches Gerät 12 kann auch als so genannter Wearable Computer bezeichnet werden. Ebenso kann das elektronische Gerät 12 in Form einer Uhr oder als eine Smartwatch ausgestaltet oder in eine solche integriert sein und ebenfalls vom Benutzer 11 am Handgelenk 14 getragen werden. Alternativ kann das elektronische Gerät 12 auch als separate Einheit vorgesehen sein oder auch in einem anderen Gerät, beispielsweise einem Smartphone, integriert werden, wobei dieses vom Benutzer 11 mitgeführt wird.

Zwischen den elektronischen Geräten 12 kann eine Kommunikationsverbindung 16 zum Austausch digitaler Informationen aufgebaut werden. Der Aufbau dieser Kommunikationsverbindung 16 wird von den Benutzern 11 durch das Ausführen einer vordefinierten physischen Interaktion 10 angesteuert. Hierfür treten die jeweiligen Benutzer 11 in Kontakt miteinander und führen dazu eine entsprechende physische Interaktion 10 aus. Diese physische Interaktion 10 kann durch eine motorische Geste, beispielsweise ein Handschlag, wie in Figur 1 dargestellt, oder auch durch eine Zeigebewegung, ein Winken oder eine beliebige andere Geste ausgeführt werden.

Diese durch eine Bewegung eines Körperteils des Benutzers 11 ausgeführte physische Interaktion 10 wird von dem mitgeführten elektronischen Gerät 12 erfasst. Hierzu ist in dem elektronischen Geräte 12 ein oder mehrere inertiale Messeinheiten (IMU) in Form eines Beschleunigungssensors und/oder Drehratensensors vorgesehen, welche ein Bewegungsmuster der physischen Interaktion 10 exakt erfasst. Solche inertiale Messeinheiten weisen eine sehr hohe Genauigkeit auf, sodass auch geringe Unterschiede zwischen Bewegungsmustern zweier physischer Interaktionen 10, beispielsweise ein unterschiedlich starkes Händeschütteln oder die Art des Händeschüttelns, registriert werden können. Diese Genauigkeit ermöglicht es zum einen, dass der Aufbau der Kommunikationsverbindung 16 zwischen den elektronischen Geräten 12 nur dann angesteuert wird, wenn die passende physische Interaktion 10 ausgeführt und vom elektronischen Gerät 12 erfasst wird. Zum anderen ermöglicht das Erfassen eines unterschiedlich starken Händeschüttelns oder eine bestimmte Bewegungsart beim Händeschütteln, dass einer solchen physischen Interaktion 10 ein bestimmter Bedeutungsgehalt zugeordnet werden kann. Dadurch kann beispielsweise vorgesehen werden, dass das elektronische Gerät 12 ein einfaches Händeschütteln zweier Benutzer 11 zur Begrüßung, bei welchem keine digitalen Informationen übermittelt werden sollen, von einem intensiven bzw. mehrmaligen Händeschütteln unterschieden wird, welches beispielsweise zur Bestätigung eines Vertragsschlusses dient, bei dem gleichzeitig zum Vertragsschluss zugehörige digitale Informationen zwischen den elektronischen Geräten 12 ausgetauscht werden sollen. Das Registrieren unterschiedlicher Bewegungsmuster physischer Interaktionen 10 ermöglicht zudem, dass in Abhängigkeit von der ausgeführten physischen Interaktion 10, die mit dieser verknüpften digitalen Informationen zwischen den elektronischen Geräten 12 ausgetauscht werden können.

Zum Aufbau der Kommunikationsverbindung 16 zwischen den elektronischen Geräten 12, wird die von den Benutzern 11 ausgeführte und erfasste physische Interaktion 10 mit einem in dem die jeweiligen elektronischen Gerät 12 hinterlegten Bewegungs- oder Interaktionsmuster verglichen, wobei nur dann die Kommunikationsverbindung 16 aufgebaut und die digitalen Informationen übermittelt oder ausgetauscht werden, wenn die erfasste physische Interaktion 10 mit dem in dem elektronischen Gerät 12 hinterlegten Interaktionsmuster erfolgreich verglichen und verifiziert wird.

Da die Bewegung jedes Benutzers 11 beim Ausführen einer bestimmten physischen Interaktion 10 ein charakteristisches Bewegungsmuster hat, ermöglicht die hohe Messgenauigkeit der inertialen Messeinheit zudem ein persönliches Identifizieren eines Benutzers 11, indem Abweichungen von diesen charakteristischen Bewegungsmuster durch die inertiale Messeinheit erfasst werden können. Durch dieses persönliche Identifizieren anhand des speziellen Bewegungsmusters eines Benutzers 11 beim Ausführen der physischen Interaktion 10, kann eine hohe Sicherheit des Übertragungsverfahrens erreicht werden, indem nur autorisierte Benutzer 11 die Kommunikationsverbindung 16 zwischen den elektronischen Geräten 12 ansteuern können. Dahingegen wird nichtautorisierten Benutzern 11 kein Ansteuern der Kommunikationsverbindung 16 aufgrund einer physischen Interaktion 10, die mit dem hinterlegten Interaktionsmuster nicht übereinstimmt, ermöglicht.

Bei der physischen Interaktion 10 in Form des Handschlags gemäß Figur 1, wird die Bewegung des Handschlags von beiden Benutzern 11 ausgeführt, sodass jedes der von den Benutzern 11 mitgeführten elektronischen Geräte 12 das Bewegungsmuster der physischen Interaktion 10 des jeweiligen Benutzers 11 erfasst. Aufgrund dieses Erfassens der physischen Interaktion 10, wird zunächst der Aufbau der Kommunikationsverbindung 16 zwischen den elektronischen Geräten 12 angesteuert. Zum Austausch der digitalen Informationen werden anschließend die beiden Bewegungsmuster der physischen Interaktion 10 miteinander verglichen und verifiziert, ob die beiden Bewegungsmuster übereinstimmen, folglich beide Benutzer 11 dieselbe physische Interaktion 10 ausgeführt haben. Auf diese Weise wird sichergestellt, dass der Austausch von digitalen Informationen nur zwischen elektronischen Geräten 12 erfolgt, mit denen im gleichen Moment dieselbe physische Interaktion 10 ausgeführt wird. Ein fälschlicher Austausch digitaler Informationen mit einem elektronischen Gerät 12, mit dem im gleichen Moment eine andere, nicht übereinstimmende Bewegung ausgeführt wird, kann dadurch ausgeschlossen werden.

Nach dem Übertragen der Informationen wird die Kommunikation zwischen den elektronischen Geräten 12 vorzugsweise automatisch beendet.

Zusätzlich kann in den elektronischen Geräten 12 ein Sensor zur Erfassung eines Körperkontaktes zwischen zwei Benutzern 11 vorgesehen werden. Hierdurch kann zusätzlich sichergestellt werden, dass die Kommunikationsverbindung 16 nur zwischen zwei elektronischen Geräten 12 aufgebaut wird, deren Benutzer 11 Körperkontakt, beispielsweise in Form des Handschlags, haben.

Ein weiteres Sicherheitsmerkmal kann dadurch erreicht werden, dass in oder an dem elektronischen Gerät 12 ein nicht näher dargestellter Sensor vorgesehen wird, durch den ein oder mehrere biometrische Merkmale des Benutzers 11 erfasst werden können. Durch das Erfassen eines biometrischen Merkmals des Benutzers 11 wird eine zusätzliche Sicherheit zum Übertragen der digitalen Informationen gewährleistet, indem nur derjenige Benutzer 11 eine Kommunikationsverbindung 16 zwischen den elektronischen Geräten 12 ansteuern und aufbauen kann, der durch das erfasste biometrische Merkmal erfolgreich Authentifiziert worden ist. Hierfür kann als biometrisches Merkmal insbesondere die Handgelenksvenenstruktur, die Handvenenstruktur, der Abdruck der Papillarleisten eines oder mehrerer Finger oder ein vergleichbares biometrisches Merkmal des Benutzers über den Sensor des elektronischen Gerätes 12 erfasst werden.

Alternativ oder ergänzend kann als biometrisches Merkmal ein definierter Bewegungsablauf des Benutzers erfasst werden. Ein solcher Bewegungsablauf kann durch den Sensor des elektronischen Gerätes 12 und/oder durch die inertiale Messeinheit, zum Beispiel dem Beschleunigungssensor und/oder dem Drehratensensor, erfasst werden. Vergleichbar eines individuellen Fingerabdrucks, bilden auch solche Bewegungsabläufe individuelle Merkmale eines Benutzers, anhand derer eine Authentifizierung des Benutzer ermöglicht ist. Dies erfolgt anhand individueller Charakteristika eines Bewegungsablaufs, welche sich beim Ausführen der gleichen Bewegungsart von Benutzer zu Benutzer unterscheiden. Die individuelle Gangart oder ein Schrittmuster des Benutzers kann beispielsweise ein solcher Bewegungsablauf darstellen. Ein solches Authentifizierungsverfahren wird auch als "behavioural based authentification" bezeichnet.

Zum erfolgreichen Authentifizieren des Benutzers 11 wird das erfasste biometrische Merkmal oder die erfassten biometrischen Merkmale mit einem in dem elektronischen Gerät 12 hinterlegten Vergleichsmuster des biometrischen Merkmals abgeglichen.

Figur 2 zeigt eine weitere Ausgestaltung des Verfahrens zum Übertragen digitaler Informationen zwischen den elektronischen Geräten 12. Hierbei erfolgt die physische Interaktion 10 zwischen den Benutzern 11, indem nur einer der Benutzer 11 eine Bewegung mit einem Körperteil ausführt, die von dem elektronischen Gerät 12 erfasst wird. Gemäß Figur 2 ist diese physische Interaktion 10 am Beispiel einer Zeigebewegung eines Benutzers 11 mit einem Finger 17 auf einen weiteren Benutzer 11 dargestellt. Hierbei wird die Kommunikationsverbindungen 16 aufgrund des Erfassens der Zeigebewegung durch das elektronische Gerät 12 des die Bewegung ausführenden Benutzers 11, zu dem elektronischen Gerät 12 des anderen Benutzers 11 aufgebaut, um die digitalen Informationen auszutauschen.

Dadurch ist es ermöglicht, dass durch die Bewegung von nur einem Benutzer 11 gezielt digitale Informationen von dessen elektronischem Gerät 12 an das elektronische Gerät 12 eines weiteren Benutzers 11 übermittelt werden. Dies kann beispielsweise bei einer Anweisung zum Ausführen einer Aufgabe durch einen Mitarbeiter angewendet werden, indem durch eine zielgerichtete Handbewegung des Benutzers 11 in Richtung eines Mitarbeiters, dieser zum Ausführen der Aufgabe bestimmt wird, wobei die Handbewegung gleichzeitig von dem elektronischen Gerät 12 erfasst wird und die Kommunikationsverbindung 16 zu dem elektronischen Gerät 12 des Mitarbeiters aufgebaut wird, um die zu dem Arbeitsauftrag gehörenden digitalen Informationen an das elektronische Gerät 12 des Mitarbeiters zu übermitteln.

Ebenso kann auf diese Weise die Steuerung einer technischen Einrichtung, beispielsweise eines Computers, einer Werkzeugmaschine oder ähnlichen Einrichtung, ermöglicht werden. Hierzu trägt der Benutzer 11 einer solchen technischen Einrichtung ein elektronisches Gerät 12 bei sich und ein weiteres elektronisches Gerät 12 ist mit der technischen Einrichtung verbunden. Hierbei erfasst das elektronische Gerät 12, welches von dem Benutzer 11 mitgeführt wird, die Bewegungen des Benutzers 11. Durch das Erfassen dieser Bewegungen wird die Kommunikationsverbindung 16 zu der technischen Einrichtung aufgebaut, wodurch die digitalen Informationen ausgetauscht werden können. Dabei können bestimmten Bewegungen entsprechende Steuerungsbefehle zum Bedienen der technischen Einrichtung zugeordnet werden.

Zum Aufbau der Kommunikationsverbindung 16 ist in den elektronischen Geräten 12 ein drahtloses Kommunikationsmodul vorgesehen. Durch dieses drahtlose Kommunikationsmodul kann ein Netzwerk zwischen mehreren elektronischen Geräten 12 zum Austausch der digitalen Informationen aufgebaut werden. Dieses Netzwerk kann beispielsweise auf einem WLAN, Bluetooth oder NFC Standard, zur drahtlosen Übertragung digitaler Informationen basieren.

### Bezugszeichenliste

10. Physische Interaktion
11. Benutzer
12. Elektronisches Gerät
13. Armband
14. Handgelenk
15.
16. Kommunikationsverbindung
17. Finger

## Patentansprüche

1. Verfahren zum Übertragen digitaler Informationen zwischen wenigstens zwei elektronischen Geräten (12), wobei jeder von zumindest zwei Benutzern (11) jeweils eines der wenigstens zwei elektronischen Geräte (12) mitführt und zum Austausch der digitalen Informationen eine Kommunikationsverbindung (16) zwischen den wenigstens zwei elektronischen Geräten (12) aufgebaut wird, **dadurch gekennzeichnet, dass**
- eine physische Interaktion (10) zwischen den zumindest zwei Benutzern (11) von zumindest einem der wenigstens zwei elektronischen Geräte (12) erfasst wird,
- durch das Erfassen der physischen Interaktion (10) von dem zumindest einem der wenigstens zwei elektronischen Geräte (12) der Aufbau der Kommunikationsverbindung (16) zwischen den wenigstens zwei elektronischen Geräten (12) angesteuert wird und
- die digitalen Informationen zwischen den wenigstens zwei elektronischen Geräten (12) ausgetauscht werden.

2. Verfahren nach Anspruch 1, **dadurch gekennzeichnet, dass** die physische Interaktion (10) durch eine Geste von wenigstens einem der zumindest zwei Benutzer (11) ausgeführt wird.

3. Verfahren nach Anspruch 2, **dadurch gekennzeichnet, dass** die Geste durch eine Körperbewegung, insbesondere einen Handschlag, eine Berührung, eine Zeigebewegung oder eine Wurfbewegung, ausgeführt wird.

4. Verfahren nach einem der vorhergehenden Ansprüche, **dadurch gekennzeichnet, dass** die von zumindest einem der wenigstens zwei elektronischen Geräte (12) erfasste physische Interaktion (10) mit einem Interaktionsmuster verglichen und verifiziert wird und bei einer erfolgreichen Verifizierung der erfassten physischen Interaktion (10), die digitalen Informationen zwischen den wenigstens zwei elektronischen Geräten (12) ausgetauscht werden.

5. Verfahren nach Anspruch 4, **dadurch gekennzeichnet, dass** mehrere sich unterscheidende Interaktionsmuster in dem elektronischen Gerät (12) hinterlegt werden, wobei jedem Interaktionsmuster unterschiedliche digitale Informationen zugeordnet sind.

6. Verfahren nach einem der vorhergehenden Ansprüche, **dadurch gekennzeichnet, dass** die physische Interaktion (10) von jedem der wenigstens zwei elektronischen Geräte (12) erfasst wird, und die jeweils von den wenigstens zwei elektronischen Geräten (12) erfassten physischen Interaktionen (10) miteinander verglichen werden und bei einem erfolgreichen Vergleich der erfassten physischen Interaktionen (10), die digitalen Informationen zwischen den wenigstens zwei elektronischen Geräten (12) ausgetauscht werden.

7. Verfahren nach einem der vorhergehenden Ansprüche, **dadurch gekennzeichnet, dass** die physische Interaktion (10) durch eine in den wenigstens zwei elektronischen Geräten (12) vorgesehene inertiale Messeinheit (IMU), insbesondere durch einen Beschleunigungssensor und/oder Drehratensensor, erfasst wird.

8. Verfahren nach einem der vorhergehenden Ansprüche, **dadurch gekennzeichnet, dass** zum Authentifizieren des Benutzers (11) von zumindest einem der wenigstens zwei elektronischen Geräte (12) wenigstens ein biometrisches Merkmal des Benutzers (11) erfasst wird.

9. Verfahren Anspruch 8, **dadurch gekennzeichnet, dass** das biometrische Merkmal des Benutzers (11), vorzugsweise die Handgelenksvenenstruktur, die Handvenenstruktur, der Abdruck der Papillarleisten eines oder mehrerer Finger, ein Bewegungsablauf, Schrittmuster oder ein vergleichbares biometrisches Merkmal des Benutzers (11), über einen Sensor des elektronischen Gerätes (12) erfasst wird.

10. Verfahren nach einem der Ansprüche 8 oder 9, **dadurch gekennzeichnet, dass** das wenigstens eine erfasste biometrische Merkmal mit einem in dem zumindest einem der wenigstens zwei elektronischen Geräte (12) hinterlegten biometrischen Merkmal verglichen wird und bei einer erfolgreichen Verifizierung des biometrischen Merkmals die Kommunikationsverbindung (16) und/oder der Austausch der digitalen Informationen zwischen den wenigstens zwei elektronischen Geräten (12) angesteuert wird.

11. Verfahren nach einem der vorhergehenden Ansprüche, **dadurch gekennzeichnet, dass** das elektronische Gerät (12) an einem Arm, einer Hand, einem Handgelenk (14) oder in der Kleidung des Benutzers vorgesehen wird, vorzugsweise als Armband (13), Smartwatch, Wearable Computer oder dergleichen vom Benutzer (11) getragen wird.

12. Elektronisches Gerät (12) umfassend eine Steuerung und eine Speichereinrichtung, sowie eine Sende- und Empfangseinrichtung zum Übertragen von in der Speichereinrichtung gespeicherten digitalen Informationen, **dadurch gekennzeichnet, dass** das Übertragen der digitalen Informationen gemäß dem Verfahren nach einem der Ansprüche 1 bis 11 vorgesehen ist.

13. System zum Übertragen digitaler Informationen zwischen wenigstens zwei elektronischen Geräten (12), wobei jedes der wenigstens zwei elektronischen Geräte (12) von einem Benutzer (11) mitführbar ist und zum Übertragen der digitalen Informationen eine Kommunikationsverbindung (16) zwischen den wenigstens zwei elektronischen Geräten (12) aufbaubar ist, **dadurch gekennzeichnet, dass** das Übertragen der digitalen Informationen gemäß dem Verfahren nach einem der Ansprüche 1 bis 11 zwischen den wenigstens zwei elektronischen Geräten (12) vorgesehen ist.

14. Computerprogramm zum Übertragen digitaler Informationen zwischen wenigstens zwei elektronischen Geräten (12), welches auf den wenigstens zwei elektronischen Geräten (12) gespeichert ist, **dadurch gekennzeichnet, dass** ein Verfahren nach einem der Ansprüche 1 bis 11 ansteuerbar ist.
